# EUROPÄISCHE PATENTSCHRIFT

(11) **EP 4 326 666 B1**
(45) Veröffentlichungstag und Bekanntmachung des Hinweises auf die Patenterteilung: **23.09.2026**
(21) Anmeldenummer: 22723080.2
(22) Anmeldetag: 14.04.2022
(51) Int. Cl.: C01B 3/00, C01B 3/50

(54) **VERFAHREN UND ANLAGE ZUM BEREITSTELLEN VON WASSERSTOFFGAS**
PROCESS AND SYSTEM FOR PROVIDING PURIFIED HYDROGEN GAS
PROCÉDÉ ET SYSTÈME DE FOURNITURE D'HYDROGÈNE GAZEUX PURIFIÉ

(30) Priorität: 19.04.2021 DE 102021203884
(43) Veröffentlichungstag der Anmeldung: 28.02.2024
(73) Patentinhaber: HYDROGENIOUS LOHC TECHNOLOGIES GMBH, 91058 Erlangen (DE)
(72) Erfinder: WEISS, Alexander, 91096 Möhrendorf (DE); SEIDEL, Alexander, 91052 Erlangen (DE); PAETZ, Caspar, 91054 Erlangen (DE); BÜCH, Holger, 91056 Erlangen (DE); TEICHMANN, Daniel, 80804 München (DE)
(74) Vertreter: Rau, Schneck & Hübner Patentanwälte Rechtsanwälte PartGmbB
(86) Internationale Anmeldenummer: PCT/EP2022/060061
(87) Internationale Veröffentlichungsnummer: WO 2022/223443

(56) Entgegenhaltungen:
- DE-A1- 102012 216 669
- DE-A1- 102014 006 430
- DE-A1- 102016 108 026
- BULGARIN A ET AL: "Purity of hydrogen released from the Liquid Organic Hydrogen Carrier compound perhydro dibenzyltoluene by catalytic dehydrogenation", INTERNATIONAL JOURNAL OF HYDROGEN ENERGY, ELSEVIER, AMSTERDAM, NL, vol. 45, no. 1, 20 November 2019 (2019-11-20), pages 712 - 720, XP085968726, ISSN: 0360-3199, [retrieved on 20191120], DOI: 10.1016/J.IJHYDENE.2019.10.067

## Beschreibung

Die vorliegende Patentanmeldung nimmt die Priorität der deutschen Patentanmeldung DE 10 2021 203 884.0 in Anspruch, deren Inhalt durch Bezugnahme hierin aufgenommen wird.

Die Erfindung betrifft ein Verfahren und eine Anlage zum Bereitstellen von Wasserstoffgas.

DE 10 2012 216 669 A1 offenbart eine Anordnung und ein Verfahren zur Energieversorgung von Schiffen. DE 10 2016 108 026 A1 offenbart einen Kompressor zum Verdichten eines Gases. DE 10 2014 006 430 A1 offenbart ein Verfahren zur Energieversorgung netzferner oder mobiler Verbraucher.

Es ist bekannt, dass Wasserstoffgas durch katalytisches Dehydrieren eines Wasserstoffträgermediums bereitgestellt werden kann.

Der Erfindung liegt die Aufgabe zugrunde, das Bereitstellen von Wasserstoff, insbesondere durch katalytisches Dehydrieren eines Wasserstoffträgermediums, zu verbessern, insbesondere die Wirtschaftlichkeit der Wasserstoffgasbereitstellung und/oder die Reinheit des bereitgestellten Wasserstoffgases zu erhöhen.

Diese Aufgabe ist erfindungsgemäß gelöst durch ein Verfahren mit den Merkmalen des Anspruchs 1 sowie durch eine Anlage mit den Merkmalen des Anspruchs 9.

Der Kern der Erfindung besteht darin, dass zumindest teilweise entladenes Wasserstoffträgermedium, von dem Wasserstoffgas durch katalytisches Dehydrieren eines zumindest teilweise beladenen Wasserstoffträgermediums freigesetzt worden ist, mittels eines Oxidationsmittels zu einem zumindest teilweise oxidierten Wasserstoffträgermedium oxidiert wird. Durch die exotherme Oxidationsreaktion wird Wärme für die endotherme Dehydrierreaktion bereitgestellt. Ein zusätzlicher Wärmebedarf ist dadurch reduziert und insbesondere entbehrlich. Das Verfahren ist wirtschaftlich. Zusätzlich wurde erkannt, dass sauerstoffhaltige Verunreinigungen effizient von dem zumindest teilweise beladenen Wasserstoffträgermedium und/oder von dem zumindest teilweise oxidierten Wasserstoffträgermedium entfernt werden. Insbesondere wurde gefunden, dass das Entfernen sauerstoffhaltiger Verunreinigungen aus dem zumindest teilweise beladenen und/oder aus dem teilweise oxidierten Wasserstoffträgermedium unkomplizierter und effizienter möglich ist, als sauerstoffhaltige Verunreinigungen aus dem freigesetzten Wasserstoffgas zu entfernen. Der Reinigungsaufwand ist insgesamt reduziert. Die Gesamteffizienz für die Bereitstellung von Wasserstoffgas mit erhöhter Reinheit ist reduziert.

Sauerstoffhaltige Verunreinigungen sind insbesondere sauerstoffhaltige Nebenprodukte, die insbesondere bei der Dehydrierung gebildet werden können, wie beispielsweise Kohlenstoffmonoxid (CO), Kohlenstoffdioxid (CO₂). Als sauerstoffhaltige Verunreinigungen werden auch oxidierte Degradationsprodukte und/oder Nebenprodukte des Wasserstoffträgermediums aus der Oxidationsreaktion sowie zumindest teilweise oxidiertes Wasserstoffträgermedium aus der Oxidationsreaktion verstanden. Wasser, das insbesondere als Flüssigkeit oder dampfförmig vorliegen kann, kann ebenfalls als sauerstoffhaltige Verunreinigung verstanden werden. Wasser kann insbesondere bei der Reduzierung des zumindest teilweise oxidierten Wasserstoffträgermediums, also bei der Hydrierung, und/oder bei dem Oxidieren des zumindest teilweise entladenen Wasserstoffträgermediums als Koppelprodukt gebildet werden.

Es wurde erkannt, dass es vorteilhaft ist, wenn der Anteil der sauerstoffhaltigen Verunreinigungen vor der Dehydrierreaktion minimiert wird. Eine Deaktivierung eines für die Dehydrierreaktion verwendeten Katalysatormaterials kann vermieden werden. Unerwünschte sauerstoffhaltige Nebenprodukte, die zu einem späteren Zeitpunkt aus der Gasphase aufwendig ausgereinigt werden müssten, können vermieden werden.

Vor dem Entfernen der mindestens einen sauerstoffhaltigen Verunreinigung kann der Wasseranteil zwischen 1 Gew.-% und 25 Gew.-% in Abhängigkeit der Verfahrensführung bei dem Hydrieren und/oder dem Oxidieren einnehmen. Nach der Hydrierung ist der Anteil von zumindest teilweise oxidiertem Wasserstoffträgermedium gering und beträgt insbesondere höchstens 1 %. Nach dem Entfernen der mindestens einen sauerstoffhaltigen Verunreinigung und insbesondere vor dem Dehydrieren des zumindest teilweise beladenen Wasserstoffträgermediums in dem Dehydrierreaktor beträgt der Anteil der mindestens einen sauerstoffhaltigen Verunreinigung bezogen auf die Masse aller Komponenten im Fluidstrom insgesamt höchstens 15 %, insbesondere höchstens 12 %, insbesondere höchstens 10 %, insbesondere höchstens 8 %, insbesondere höchstens 5 %, insbesondere höchstens 3 %, insbesondere höchstens 1 %, insbesondere höchstens 0,5 %, insbesondere höchstens 0,1 % und insbesondere höchstens 0,01 %.

Als besonders vorteilhaft hat sich erwiesen, wenn die sauerstoffhaltigen Verunreinigungen aus dem zumindest teilweise beladenen Wasserstoffträgermedium entfernt werden, insbesondere nachdem das Wasserstoffträgermedium in einem Hydrierreaktor zumindest teilweise beladen worden ist.

Das Entfernen der sauerstoffhaltigen Verunreinigungen kann aber zusätzlich oder alternativ aus dem zumindest teilweise oxidierten Wasserstoffträgermedium, insbesondere vor einer nachfolgenden Hydrierreaktion in dem Hydrierreaktor erfolgen.

Insbesondere wurde erkannt, dass es für die Gesamteffizienz des Verfahrens vorteilhaft ist, wenn bereits gereinigtes Wasserstoffträgermedium für die Dehydrierreaktion bereitgestellt wird. Dadurch, dass in einem vorgelagerten Reinigungsschritt die sauerstoffhaltigen Verunreinigungen aus dem flüssigen Wasserstoffträgermedium zumindest teilweise entfernt worden sind, lässt sich der Anteil an Verunreinigungen in dem freigesetzten Wasserstoffgas von vornherein effizient reduzieren, also verringern.

Die Hydrierung findet an einem Hydrierkatalysator, insbesondere bei einem Druckniveau von 5 bis 50 barg, insbesondere 10 bis 40 barg und insbesondere bei 15 bis 30 barg sowie bei einer Reaktionstemperatur von 100 bis 350° C, insbesondere 150 bis 300° C und insbesondere bei 200 bis 270° C statt. Als Material für den Hydrierkatalysator dient insbesondere Platin, Palladium, Ruthenium, Nickel und/oder Rhodium. Das Katalysatormaterial für die Hydrierung ist insbesondere auf einem inerten Katalysatorträger aufgebracht. Das inerte Material für den Katalysatorträger kann Aluminiumoxid, Siliziumoxid, Siliziumcarbid und/oder Aktivkohle sein.

Bei der katalytischen Hydrierreaktion wird das zumindest teilweise oxidierte Wasserstoffträgermedium Ox-LOHC zu dem zumindest teilweise geladenen Wasserstoffträgermedium Hx-LOHC chemisch umgesetzt zu einer, insbesondere chemisch, reduzierten und insbesondere sauerstofffreien Verbindung unter Wasserabspaltung. Diese Wasserabspaltung bei der Hydrierreaktion stellt ein Entfernen einer sauerstoffhaltigen Verunreinigung aus dem zumindest teilweise geladenen Wasserstoffträgermedium Hx-LOHC dar. Es handelt sich dabei um einen integrierten Reinigungsschritt für das zumindest teilweise geladene Wasserstoffträgermedium Hx-LOHC.

Zusätzlich oder alternativ kann ein Entfernen sauerstoffhaltiger Verunreinigungen aus dem zumindest teilweise oxidierten Wasserstoffträgermedium Ox-LOHC erfolgen, insbesondere durch Einsatz einer Strip-Kolonne und/oder mittels selektiver Adsorption.

Es wurde gefunden, dass es mit dem erfindungsgemäßen Verfahren möglich ist, Wasserstoff mit erhöhter Reinheit bereitzustellen. Insbesondere beträgt die Reinheit des freigesetzten Wasserstoffgases, insbesondere nach einer abschließenden Gasreinigung, mindestens 99,0 %, insbesondere mindestens 99,7 % und insbesondere mindestens 99,999 %. Insbesondere dient die Gasreinigung einer Entfernung sauerstoffhaltiger Verunreinigungen, wobei insbesondere weniger als 200 ppmV, insbesondere weniger als 100 ppmV, insbesondere weniger als 10 ppmV und insbesondere weniger als 1 ppmV entfernt werden. In dem freigesetzten Wasserstoffgas können noch Kohlenwasserstoffe als Verunreinigung enthalten sein, deren Anteil bezogen auf das freigesetzte Wasserstoffgas weniger beträgt als 1000 ppmV, insbesondere weniger als 500 ppmV und insbesondere weniger als 200 ppmV. Das freigesetzte Wasserstoffgas kann, insbesondere im Anschluss an die Gasreinigung, an einen Wasserstoffgas-Verbraucher übergeben werden. Der Wasserstoffgas-Verbraucher ist insbesondere eine Brennstoffzelle.

Für die Durchführung der Oxidationsreaktion dient ein Oxidationskatalysator, der insbesondere in dem Oxidationsreaktor angeordnet ist. Der Oxidationskatalysator weist einen katalytisch aktiven Feststoff auf, der ein oder mehrere Metalle, insbesondere Vanadium, Antimon, Cäsium, Mangan, Titan, Eisen, Kobalt, Kupfer, Platin, Palladium, Ruthenium, Cer und/oder Nickel aufweist. Als besonders vorteilhaft haben sich Oxidationskatalysatoren erwiesen, die Vanadium und insbesondere zusätzlich Antimon und/oder Cäsium aufweisen. Das Metall ist insbesondere an einem Katalysatorträger befestigt, der insbesondere ein poröses Trägermaterial aufweist. Insbesondere wurde gefunden, dass Titanoxid und/oder Vanadiumoxid als Oxidationskatalysator verwendet werden kann. Ein separates Trägermaterial ist in diesem Fall nicht erforderlich. Das jeweilige Metalloxid kann den Oxidationskatalysator selbst darstellen. Das Katalysatormaterial ist mit einem Masseanteil bezogen auf das Material des Katalysatorträgers von 0,01 % bis 50 %, insbesondere von 0,1 % bis 10 % und insbesondere von 0,3 % bis 5 % vorgesehen. Als Katalysatorträgermaterial dient insbesondere ein Metalloxid oder ein kohlenstoffhaltiges Trägermaterial, insbesondere poröses Aluminiumoxid, Siliziumoxid, Titanoxid, Siliziumcarbid, Ceroxid oder Aktivkohle. Als vorteilhaft hat sich ein Oxidationskatalysator erwiesen, der aus Vanadium(V)-oxid, Antimon(III)-oxid und Cäsiumcarbonat auf Titanoxid aufgebaut ist.

Es wurde gefunden, dass die Exothermie der katalytischen Oxidationsreaktion vorteilhaft für das Gesamtverfahren genutzt werden kann. Insbesondere kann Abwärme aus der Oxidationsreaktion für andere Verfahrensschritte, insbesondere die Dehydrierreaktion, bereitgestellt werden. Chemisch gebundener Wasserstoff, der an dem zumindest teilweise entladenen Wasserstoffträgermedium HO-LOHC gebunden ist, kann durch die Oxidationsreaktion effizient zu Wasser oxidiert werden. Aufgrund der zumindest teilweise unvollständigen Dehydrierung von Hx-LOHC in dem Dehydrierreaktor zu HO-LOHC ist das Wasserstoffträgermedium zumindest teilweise entladen, weist also noch einen gewissen Anteil an Rest-Wasserstoff auf. Es wurde gefunden, dass dieser Rest-Wasserstoff vorteilhaft oxidiert und somit für die Wärmebereitstellung für die Dehydrierreaktion genutzt werden kann. Insbesondere ist ein vergleichsweise ineffizienter Rücktransport des zumindest teilweise entladenen Wasserstoffträgermediums HO-LOHC vermieden.

Durch die Nutzung des chemisch gebundenen Rest-Wasserstoffs ist die Gesamteffizient des Verfahrens verbessert.

Zusätzlich oder alternativ kann in dem Oxidationsreaktor die Umsetzung mindestens einer Alkylgruppe und/oder mindestens einer Alkylengruppe, insbesondere mindestens einer Methylgruppe und/oder mindestens einer Methylengruppe, in eine Ketogruppe, in eine Aldehydgruppe und/oder in eine Carbonsäuregruppe durch Oxidation stattfinden.

Zusätzlich oder alternativ kann in dem Oxidationsreaktor auch Wasserstoffgas zu Wasser oxidiert werden. Wasserstoffgas kann in dem Fluidstrom, der dem Oxidationsreaktor zugeführt wird, insbesondere in physikalisch gelöster Form vorliegen. Es ist auch möglich, dass Bestandteile von bereits freigesetztem Wasserstoffgas, das aus dem Fluidstrom nicht vollständig abgetrennt worden ist, infolge einer Rückführung wieder dem Oxidationsreaktor zugeführt werden. Auch diese Rest-Bestandteile des freigesetzten Wasserstoffgases können in dem Oxidationsreaktor zu Wasser oxidiert werden. Insbesondere beträgt der Anteil des physikalisch gelösten und/oder freigesetzten Wasserstoffgases in dem Fluidstrom, der dem Oxidationsreaktor zugeführt wird, und das insbesondere ausschließlich das zumindest teilweise entladene Wasserstoffträgermedium und Wassergas umfasst, höchstens 0,001 Gew.-% bezogen auf die Masse des zugeführten Fluidstroms, insbesondere höchstens 0,02 Gew.-%, insbesondere höchstens 0,05 Gew.-% und insbesondere 0,01 Gew.-%.

Durch die Oxidationsreaktion wird höchstens 5 %, insbesondere höchstens 3 % und insbesondere höchstens 1 % des in dem zumindest teilweise entladenen Wasserstoffmediums HO-LOHC enthaltenen Kohlenstoffs zu Kohlenstoffdioxid (CO₂) und/oder zu Kohlenstoffmonoxid (CO) umgesetzt.

Ein Verfahren gemäß Anspruch 2 ist besonders wirtschaftlich. Es wurde gefunden, dass mittels der in dem Oxidationsreaktor erzeugten Wärme, insbesondere mindestens 60 % des für die Dehydrierreaktion erforderlichen Wärmebedarfs bereitgestellt werden kann. Insbesondere können mindestens 70 %, insbesondere mindestens 80 %, insbesondere mindestens 90 % und insbesondere mindestens 95 % des Wärmebedarfs für die Dehydrierreaktion bereitgestellt werden. Insbesondere kann die gesamte Wärme, die für die Dehydrierreaktion erforderlich ist, bereitgestellt werden. Der zusätzliche Aufwand für das Bereitstellen von Wärme ist reduziert und insbesondere vermieden.

Die Verwendung eines Dehydrierkatalysators gemäß Anspruch 3 hat sich als besonders vorteilhaft erwiesen. Es wurde insbesondere gefunden, dass ein Dehydrierkatalysator, der zumindest anteilig Schwefel aufweist, besonders selektiv wirkt. Überraschend wurde insbesondere gefunden, dass die Auswahl des Dehydrierkatalysators einen unmittelbaren Einfluss auf die Selektivität der Oxidationsreaktion und damit auch auf die Reinheit des freigesetzten Wasserstoffgases hat. Dadurch ist es möglich, dass bei der Dehydriereaktion signifikant weniger Nebenprodukte, insbesondere weniger große und/oder weniger hoch siedende Nebenprodukte, insbesondere polyzyklische Kohlenwasserstoffverbindung und/oder andere Polymerisations- und/oder Kondensationsprodukte, insbesondere polyaromatische Kohlenwasserstoffe, und/oder Spaltprodukte wie Toluol, Xylol und/oder Benzol und/oder deren oxidierte Spezies wie Benzophenone, Benzoesäure, Benzaldehyd und/oder Phthalsäureanhydrid, gebildet werden. Infolge der Oxidation des Wasserstoffträgermediums können zusätzlich oder alternativ hochsiedende Moleküle als Nebenprodukte gebildet werden, insbesondere wenn Alkylgruppen nicht vollständig oxidiert und als Kohlenstoffmonoxyd (CO) und/oder Kohlenstoffdioxid (CO₂) abgespaltet werden, sondern intermolekular mit anderen Wasserstoffträgermedien wechselwirken. Hochsiedende Moleküle infolge der Oxidation von Diphenylmethan und Biphenyl sind insbesondere Fluorenone, Xanthone und Anthraquinone.

Durch die selektive Dehydrierung können sauerstoffhaltige Verunreinigungen in dem Verfahren frühzeitig reduziert, also verringert, und insbesondere unterbunden werden. Der Dehydrierkatalysator umfasst ein metallisches Katalysatormaterial, das mit Schwefel versetzt ist, also sulfidiert ist. Es wurde insbesondere gefunden, dass die selektive Dehydrierung verbessert ist, wenn der Dehydrierkatalysator ein Atomverhältnis von Metall/Schwefel von 1 : 1 bis 1 : 10, insbesondere von 1 : 1,5 bis 1 : 5 und insbesondere von 1 : 1,5 bis 1 : 2,5 und insbesondere von 1 : 2 aufweist. Das Katalysatormaterial ist insbesondere an einem Katalysatorträger angeordnet und insbesondere daran befestigt. Als Katalysatorträger dient insbesondere Aluminiumoxid, Siliziumoxid, Siliziumcarbid und/oder Aktivkohle. Das Material des Katalysatorträgers ist insbesondere inert, nimmt also an der Dehydrierreaktion nicht teil. Der Gewichtsanteil des Katalysatormaterials ist bezogen auf das Material des Katalysatorträgers in einem Bereich zwischen 0,1 % und 10 %, insbesondere zwischen 0,2 % und 8 %, insbesondere zwischen 0,5 % und 5 %.

Insbesondere wurde gefunden, dass die Selektivität der Dehydrierreaktion unmittelbaren Einfluss auf die Selektivität der nachfolgenden Oxidationsreaktion des zumindest teilweise entladenen Wasserstoffträgermediums hat. Die selektive Dehydrierung mittels des verwendeten Dehydrierkatalysators ist besonders effizient für das Gesamtverfahren. Insbesondere wurde gefunden, dass polyzyklische Kohlenwasserstoffe nicht selektiv oxidiert werden können, da insbesondere die Oxidation von Methylgruppen weniger selektiv ist als die Oxidation von Methylengruppen. Spaltprodukte, wie Toluol und/oder Xylol, die insbesondere aus Benzyltoluol gebildet werden können, erhöhen die Gesamtanzahl an Methylgruppen, die durch Spaltung von Methylengruppen umgewandelt werden.

Ein Verfahren gemäß Anspruch 4 reduziert, also verringert, den Anteil unerwünschter Stoffe durch die katalytische Oxidationsreaktion. Insbesondere ist es möglich, die Bildung funktioneller Carbonsäuregruppen, Aldehydgruppen und/oder von zyklischen, hochsiedenden Nebenprodukten zu reduzieren, also zu verringern, oder zu vermeiden. Zudem wird die Bildung von unerwünschtem Kohlenstoffmonoxid (CO) und/oder Kohlenstoffdioxid (CO₂) reduziert.

Insbesondere ist der Gesamtanteil an Nebenprodukten höchstens 10 % bezogen auf die Masse aller Komponenten des Fluidstroms, insbesondere höchstens 5 %, insbesondere höchstens 3 % und insbesondere höchstens 1 %. Der Anteil der Carbonsäuregruppen und/oder der Aldehydgruppen im Fluidstrom beträgt höchstens 5 %, insbesondere höchstens 3 % und insbesondere höchstens 1 %. Der Masseanteil der zyklischen, hoch siedenden Nebenprodukte im Fluidstrom beträgt höchstens 5 %, insbesondere höchstens 3 % und insbesondere höchstens 1 %.

Oxidierte Spaltprodukte sind insbesondere Benzoesäure, Benzaldehyd, Toluylsäuren und/oder Tolualdehyde. Hoch siedende Nebenprodukte sind insbesondere kleinere polyzyklische Kohlenwasserstoffverbindungen wie Naphthalin und/oder Antrazen und/oder deren oxydierte Form, insbesondere Anthrachinone und/oder Xanthone. Hoch siedende Nebenprodukte können aber auch größere Kohlenwasserstoffstrukturen aufweisen und bis zu 12 Ringsysteme aufweisen. Funktionelle Sauerstoffgruppen sind reaktiv und können die Bildung von hoch siedenden Molekülstrukturen begünstigen, wobei Aldehydspezies reaktiver sind als Ketone. Es ist außerdem möglich, dass Kohlenstoffmonoxid und Kohlenstoffdioxid als Produkte einer vollständigen Oxidation von abgespalteten Methylgruppen gebildet werden.

Derartige Komponenten können beispielsweise bei der Oxidation von Methylgruppen entstehen, die insbesondere in Toluol und/oder Xylol vorhanden sind. Durch das selektive Oxidieren bei der katalytischen Oxidationsreaktion kann der Anteil von sauerstoffhaltigen Verunreinigungen insgesamt reduziert, also verringert, werden und beträgt insgesamt höchstens 10 % bezogen auf die Masse aller Komponenten im Fluidstrom, insbesondere höchstens 8 %, insbesondere höchstens 5 %, insbesondere höchstens 3 %, insbesondere höchstens 2 %, insbesondere höchstens 1 %, insbesondere höchstens 0,5 %, insbesondere höchstens 0,1 % und insbesondere höchstens 0,01 %. Die hier genannten Werte beziehen sich auf sauerstoffhaltige Verunreinigungen ohne Wasser.

Als Reste einer Alkylgruppe und/oder einer Alkylengruppe dient insbesondere eine Phenylgruppe und/oder deren hydrierte Form, insbesondere wie in Benzyltoluol und/oder Dibenzyltoluol. Insbesondere kann eine Methylengruppe in einer längeren Alkylkette, insbesondere zwischen zwei Kohlenwasserstoffringen oder als Substituent an einem Kohlenwasserstoffring angeordnet sein.

Ein Verfahren gemäß Anspruch 5 ermöglicht eine gezielte Oxidationsreaktion. Als Oxidationsmittel dient beispielsweise Sauerstoff und/oder Luft. Es wurde gefunden, dass als Oxidationsmittel auch flüssige Verbindungen wie beispielsweise Wasserstoffperoxid dienen kann. Möglich ist auch die Verwendung eines Oxidationsmittels, das als Feststoff vorliegt, der insbesondere in dem Oxidationsreaktor als Schüttung vorliegen kann.

In einer ersten Ausführungsform wird die Oxidationsreaktion bei gleichzeitiger Anwesenheit des zumindest teilweise entladenen Wasserstoffträgermediums und des Oxidationsmittels im Kontakt mit dem Oxidationskatalysator durchgeführt. Insbesondere werden das zumindest teilweise entladene Wasserstoffträgermedium und das Oxidationsmittel gemeinsam und zeitgleich dem Oxidationsreaktor zugeführt.

In einer zweiten Ausführungsform wird die Zugabe des zumindest teilweise entladenen Wasserstoffträgermediums und die Zugabe des Oxidationsmittels zeitlich entkoppelt. Die Oxidationsreaktion wird dabei in einer Weise durchgeführt, bei der zunächst in einem ersten Reaktionstakt nur das zumindest teilweise entladene Wasserstoffträgermedium mit dem oxidierten Katalysator im Reaktionsapparat kontaktiert wird und dabei durch Reaktion des am Katalysator gebundenen Sauerstoffs mit dem zumindest teilweise entladenen Wasserstoffträgermedium die oxidierte Form des Katalysators in eine reduzierte Form des Katalysators unter Übertragung von zumindest einem Wasserstoffatom auf das zumindest teilweise entladene Wasserstoffträgermedium erfolgt. Der auf diese Weise reduzierte Katalysator wird im Anschluss in einem zweiten Reaktionstakt ohne weitere Zugabe des zumindest teilweise entladenen Wasserstoffträgermediums aber unter Zugabe eines Oxidationsmittels, insbesondere unter Zugabe von Luft, wieder oxidiert. Dieser zweite Reaktionstakt kann unter anderen oder gleichen Temperatur- und Druckbedingungen ausgeführt werden wie der erste Reaktionstakt. In dieser zweiten Ausführungsform wechseln sich der erste und zweite Reaktionstakt insbesondere in regelmäßigen Abständen ab. Der Taktwechsel erfolgt in Zeitintervallen zwischen 2 Sekunden und 5 Stunden, insbesondere zwischen 10 Sekunden und 1 Stunde und insbesondere zwischen 60 Sekunden und 30 Minuten. Die Reaktionstakte können gleiche oder unterschiedliche Zeitspannen umfassen.

Es wurde überraschend gefunden, dass die zeitliche Entkoppelung der Zugabe des zumindest teilweise entladenen Wasserstoffträgermediums und des Oxidationsmittels in dieser zweiten Ausführungsform zu einer erhöhten Selektivität bei der Oxidation des zumindest teilweise entladenen Wasserstoffträgermediums führt. Insbesondere ist unter vergleichbaren Temperatur- und Druckbedingungen die unerwünschte Bildung von Kohlenstoffdioxid deutlich erniedrigt.

Das zumindest teilweise entladene Wasserstoffträgermedium und das Oxidationsmittel werden insbesondere im Gegenstrom, also antiparallel, zueinander in dem Oxidationsreaktor gefördert. Es ist aber grundsätzlich auch erdenkbar, den Oxidationsreaktor im Gleichstrom zu betreiben.

Es ist möglich, das Oxidationsmittel an mehreren Oxidationsmittelzugabestellen dem Oxidationsreaktor zuzugeben. Die Oxidationsmittelzugabestellen können entlang der Reaktionszone in dem Oxidationsreaktor beabstandet zueinander angeordnet sein. Dadurch ist es möglich, die Sauerstoffkonzentration entlang der Reaktionszone gezielt einzustellen. Durch die Einstellung der Sauerstoffkonzentration im Oxidationsreaktor wird die Oxidationsreaktion unmittelbar beeinflusst und damit das sich einstellende Temperaturprofil entlang der Reaktionszone und damit ein Wärmeprofil, das für die Abgabe an den Dehydrierreaktor zur Verfügung steht. Durch die Zugabe des Oxidationsmittels ist es also insbesondere möglich, das Temperaturprofil in dem Oxidationsreaktor einzustellen, insbesondere zu regeln und insbesondere homogen zu verteilen.

Zusätzlich oder alternativ kann die Reaktionskinetik in dem Oxidationsreaktor auch durch aktive Abkühlung im Oxidationsreaktor, insbesondere entlang der Reaktionszone, erfolgen. Dadurch ist insbesondere eine Regelung des Temperaturprofils entlang der Reaktionszone möglich. Insbesondere können Exothermiespitzen, also Temperaturüberhöhungen, unterdrückt werden. Eine aktive Abkühlung kann beispielsweise durch die Zudosierung von kalter, insbesondere im Verhältnis zur Reaktionstemperatur im Oxidationsreaktor weniger aufgewärmter Luft und/oder weniger aufgewärmten Oxidationsmittels erfolgen. Das zudosierte Oxidationsmittel, das zur aktiven Abkühlung genutzt wird, weist eine Maximaltemperatur von höchstens 300 °C, insbesondere von höchstens 200 °C, insbesondere von höchstens 150 °C, insbesondere von höchstens 100 °C, insbesondere von höchstens 50 °C und insbesondere von höchstens 30 °C auf.

Es ist insbesondere denkbar, dass die Sauerstoffkonzentration in dem Oxidationsreaktor mittels mindestens eines Sensors, insbesondere mehrerer Sensoren, die entlang der Reaktionszone beabstandet zueinander angeordnet sind, zu erfassen und insbesondere die Zugabe des Oxidationsmittels an den Oxidationsmittelzugabestellen geregelt durchzuführen. Dazu ist es möglich, an den Oxidationsmittelzugabestellen regelbare Ventile anzuordnen. Das geregelte Zuführen des Oxidationsmittels kann auch mit nur einer Oxidationsmittelzugabestelle erfolgen.

Zusätzlich oder alternativ kann die Temperaturführung im Oxidationsreaktor auch dadurch erfolgen, dass zumindest teilweise oxidiertes Wasserstoffträgermedium aus dem Oxidationsreaktor über eine direkte Rücklaufführung im direkten Kreislaufstrom dem Oxidationsreaktor wieder zugeführt wird, insbesondere zusammen mit dem dem Oxidationsreaktor zugeführten, zumindest teilweise entladenen Wasserstoffträgermedium HO-LOHC. Durch das Verhältnis des rückgeführten oxidierten Wasserstoffträgermediums Ox-LOHC zu dem zumindest teilweise entladenen Wasserstoffträgermedium HO-LOHC lässt sich das Temperaturprofil in dem Oxidationsreaktor regeln, insbesondere homogener verteilen, da partielle Umsetzungen je Reaktionsabschnitt erfolgen. Insbesondere ist es dadurch möglich, lokale und/oder zeitliche Exothermiespitzen zu vermeiden, die eine thermische Degradation des Wasserstoffträgermediums bewirken können. Das Risiko der vorzeitigen Degradation des Wasserstoffträgermediums ist durch die gezielte Temperatur beeinflussbar und im Oxidationsreaktor durch die gezielte Oxidationsmittelzugabe und/oder eine Kreislaufführung des zumindest teilweise oxidierten Wasserstoffträgermediums Ox-LOHC reduziert, also verringert.

Ein Verfahren gemäß Anspruch 6 steigert dessen Gesamteffizienz. Insbesondere ist der Bedarf an externer Wärme reduziert. Es wurde insbesondere gefunden, dass das aus dem Oxidationsreaktor abgeführte Oxidationsmittel vorteilhaft thermisch verwertet werden kann. Dazu kann es vorteilhaft sein, das Oxidationsmittel aus einem Gemisch, das aus dem Oxidationsreaktor abgeführt wird, vor der thermischen Verwertung abzutrennen.

Ein Verfahren, bei dem der Anteil an Nebenprodukten, insbesondere hochsiedenden Nebenprodukten mit mehr als drei verknüpften, aromatischen Ringsystemen durch Polymerisations- und/oder Kondensationsreaktionen, und/oder Spaltprodukten, insbesondere Toluol, Xylol und/oder Benzol, in dem HO-LOHC nach dem Dehydrieren höchstens 3%, insbesondere höchstens 1% und insbesondere höchstens 0,3% beträgt, gewährleistet einen reduzierten, also verringerten, Anteil an, insbesondere unerwünschten, Nebenprodukten im Kreislauf des Wasserstoffträgermediums. Insbesondere beträgt der Anteil an polyaromatischen Kohlenwasserstoffen und/oder Spaltprodukten wie Toluol und/oder Benzol nach dem Dehydrieren höchstens 3 Gew.-%, insbesondere höchstens 1 Gew.-% und insbesondere höchstens 0,3 Gew.-%.

Die Verwendung eines Wasserstoffträgermediums gemäß Anspruch 7 ist vorteilhaft. Insbesondere weist das Wasserstoffträgermedium aromatische Kohlenwasserstoffe mit einer funktionellen Methylengruppe auf. Als besonders geeignet hat sich eine Mischung aus Diphenylmethan und Biphenyl erwiesen. Es wurde gefunden, dass Biphenyl als eutektisches Additiv dient und den Schmelzpunkt der Mischung auf unterhalb von 20° C senkt. Darüber hinaus weist Biphenyl eine hohe Wasserstoffspeicherkapazität auf, die 7,2 Gew.-% beträgt. Diphenylmethan eignet sich insbesondere für die Oxidationsreaktion, da ausschließlich funktionelle Methylengruppen vorliegen, die selektiv umgesetzt, also selektiv oxidiert werden. Die Degredation dieser Mischung in Form von sauerstoffhaltigen Nebenprodukten ist reduziert, also verringert. Als besonders vorteilhaft hat sich eine Mischung von Biphenyl und Diphenylmethan in einem Verhältnis von 40 : 60, insbesondere 35 : 65 und insbesondere 30 : 70 erwiesen.

Zusätzlich oder alternativ kann das Wasserstoffträgermedium Benzyltoluol und/oder Dibenzyltoluol aufweisen.

Ein Verfahren gemäß Anspruch 8 reduziert den zusätzlichen Wärmebedarf für die Dehydrierreaktion. Es wurde erkannt, dass die Übertragung der Wärme auf die Dehydrierreaktion vorteilhaft ist, wenn die Reaktionstemperatur im Oxidationsreaktor mindestens 10° K größer ist als die Reaktionstemperatur im Dehydrierreaktor. Die Wärmeübertragung kann beispielsweise mittels eines Thermalölkreislaufs erfolgen. Zusätzlich oder alternativ ist es denkbar, den Oxidationsreaktor baulich, also konstruktiv, in und/oder an dem Dehydrierreaktor zu integrieren. Eine unmittelbare Wärmeübertragung ist dadurch vereinfacht. Für die Integration des Oxidationsreaktors in den Dehydrierreaktor eignet sich insbesondere eine hochvolumige Ausführung, insbesondere mittels mehrerer Oxidationsrohre, um den Wärmeübertrag zu verbessern.

Ein Verfahren, bei dem das durch das Dehydrieren freigesetzte Wasserstoffgas einen Anteil der mindestens einen sauerstoffhaltigen Verunreinigung aufweist, der kleiner ist als 200 ppmV, insbesondere kleiner als 100 ppmV, insbesondere kleiner als 10 ppmV und insbesondere kleiner ist als 1 ppmV, ermöglicht die Bereitstellung von Wasserstoffgas mit erhöhter Reinheit.

Eine Anlage gemäß Anspruch 9 weist im Wesentlichen die Vorteile des Verfahrens gemäß Anspruch 1 auf, worauf hiermit verwiesen wird. Insbesondere wurde gefunden, dass eine Anlage mit Dehydrierreaktor, Oxidationsreaktor, Hydrierreaktor und Reinigungseinheit ein besonders effizientes Freisetzungsverfahren ermöglicht und die Reinheit des freigesetzten Wasserstoffgases verbessert ist.

Eine Anlage gemäß Anspruch 10 hat sich als besonders effizient erwiesen. Das Entfernen der sauerstoffhaltigen Verunreinigungen aus dem Wasserstoffträgermaterial ist mittels einer Adsorptionseinheit besonders effizient. Zusätzlich oder alternativ können als Reinigungseinheit auch ein Wasserabscheider und/oder eine Strip-Kolonne dienen.

Eine Anlage gemäß Anspruch 11 vereinfacht die gezielte Zuführung eines Oxidationsmittels in den Oxidationsreaktor. Insbesondere sind an der mindestens einen Oxidationsmittelzugabestelle regelbare Ventile angeordnet, die insbesondere mit einer Regelungseinheit in, insbesondere bidirektionaler, Signalverbindung stehen.

Eine Ausführung der Anlage gemäß Anspruch 12 ist hinsichtlich der Wärmeübertragung von dem Oxidationsreaktor auf den Dehydrierreaktor besonders effizient. Eine direkte, insbesondere unmittelbare, Wärmeübertragung auf den Dehydrierreaktor ist dadurch verbessert. Wärmeübertragungsverluste sind minimiert. Insbesondere beträgt der Anteil der in dem Oxidationsreaktor erzeugten Wärme auf den Dehydrierreaktor mindestens 80 %, insbesondere mindestens 90 %, insbesondere mindestens 95 %, insbesondere mindestens 98 % und insbesondere 100 %.

Eine Anlage, bei der der Oxidationsreaktor mindestens ein Oxidationsrohr aufweist, in dem die Oxidationsreaktion stattfindet, wobei das mindestens eine Oxidationsrohr, insbesondere vollständig, innerhalb des Dehydrierreaktors angeordnet ist, weist einen hochvolumigen Oxidationsreaktor auf. Die Wärmeübertragung ist dadurch verbessert. Besonders vorteilhaft ist es, wenn der Oxidationsreaktor zu mindestens 60 %, zu mindestens 70 %, insbesondere zu mindestens 80 %, insbesondere zu mindestens 90 % und insbesondere vollständig, innerhalb des Dehydrierreaktors angeordnet ist. Unter einer vollständig integrierten Anordnung ist zu verstehen, dass zumindest der Teil des Oxidationsreaktors, in dem die Oxidationsreaktion stattfindet, vollständig innerhalb eines Bauraums des Dehydrierreaktors angeordnet ist. Als Bauraum des Dehydrierreaktors wird der Teil des Dehydrierreaktors verstanden, in dem die Dehydrierreaktion stattfindet. Das bedeutet insbesondere dass eine vollständige Integration des Oxidationsreaktors in den Dehydrierreaktor auch dann gegeben ist, wenn einzelne Bestandteile der Reaktoren wie beispielsweise Zuführleitungen und Anschlüsse außerhalb des Reaktionsraums des jeweils anderen Reaktors angeordnet sind.

Besonders vorteilhaft ist es, wenn das mindestens eine Oxidationsrohr zumindest teilweise und insbesondere vollständig vom Dehydrierkatalysator umgeben ist, wobei die Strömungsrichtung des zumindest teilweise beladenen Wasserstoffträgermediums durch den Dehydrierreaktor quer und insbesondere senkrecht zu der Längsachse des mindestens einen Oxidationsrohrs angeordnet ist.

Eine Anlage gemäß Anspruch 13 ermöglicht eine vorteilhafte Integration mehrerer Oxidationsmittelzugabestellen in den Oxidationsreaktor.

Sowohl die in den Patentansprüchen angegebenen Merkmale als auch die in dem Ausführungsbeispiel einer erfindungsgemäßen Anlage gegebenen Merkmale sind jeweils für sich alleine oder in Kombination miteinander geeignet, den erfindungsgemäßen Gegenstand weiterzubilden. Die jeweiligen Merkmalskombinationen stellen hinsichtlich der Weiterbildungen des Erfindungsgegenstands keine Einschränkungen dar, sondern weisen im Wesentlichen lediglich beispielhaften Charakter auf.

Weitere Merkmale, Vorteile und Einzelheiten der Erfindung ergeben sich aus der nachfolgenden Beschreibung eines Ausführungsbeispiels anhand der Zeichnung. Es zeigen:
- Fig. 1: eine schematische Darstellung einer erfindungsgemäßen Anlage,
- Fig. 2: eine schematische Darstellung eines in einen Dehydrierreaktor integrierten Oxidationsreaktors,
- Fig. 3: eine schematische Darstellung der Reaktionen in der Anlage gemäß Fig. 1,
- Fig. 4: eine schematische Darstellung des funktionellen Zusammenhangs der Sauerstoffkonzentration in dem Oxidationsreaktor gemäß Fig. 2.

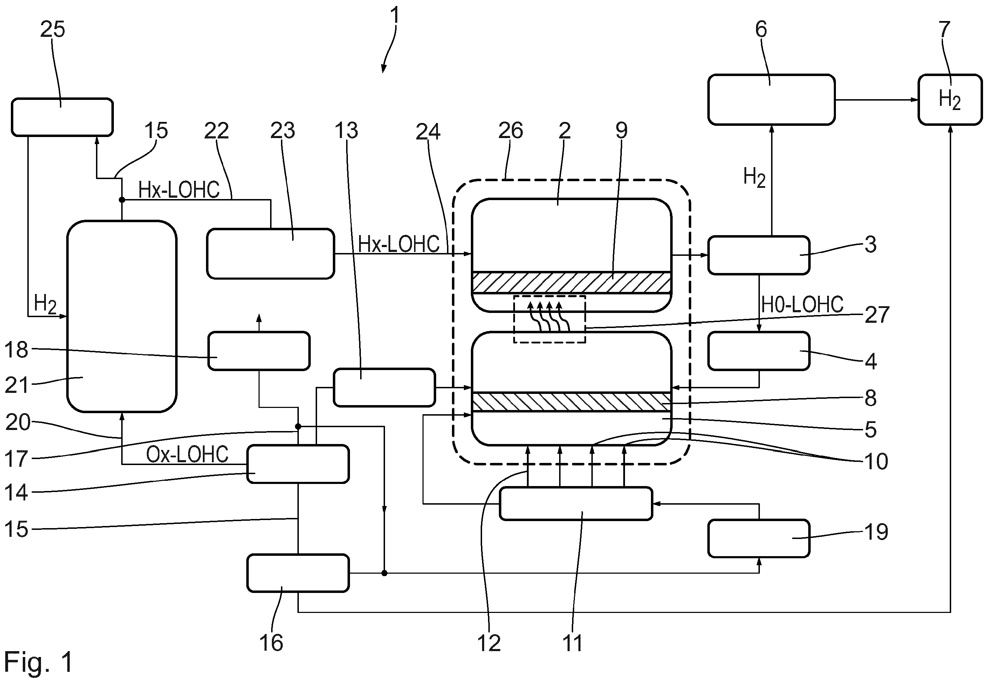

Eine in Fig. 1 als Ganzes mit 1 gekennzeichnete Anlage dient zum Bereitstellen von Wasserstoffgas, insbesondere mit erhöhter Reinheit.

Die Anlage 1 weist einen Dehydrierreaktor 2 auf, in dem ein Dehydrierkatalysator 9 angeordnet ist. Der Dehydrierkatalysator 9 weist ein metallisches Katalysatormaterial auf, das sulfidiert ist.

An dem Dehydrierkatalysator 2 ist ein erster Trennapparat 3 angeschlossen, der zum Abtrennen von Wasserstoffgas von dem aus dem Dehydrierreaktor 2 abgeführten Wasserstoffträgermedium in der zumindest teilweise entladenen Form (H0-LOHC) dient.

Der erste Trennapparat 3 ist mit einer Gasreinigungseinheit 6 verbunden, die mit einer Wasserstoffgasverwertungseinheit 7 koppelbar ist. Die Wasserstoffverwertungseinheit 7 ist insbesondere eine Brennstoffzelle.

An den ersten Trennapparat 3 ist ein erster Rekuperationsapparat 4 angeschlossen, der mit einem Oxidationsreaktor 5 verbunden ist. In dem Oxidationsreaktor 5 ist ein Oxidationskatalysator 8 angeordnet.

Der Oxidationskatalysator 8 ist in dem Oxidationsreaktor 5 entlang einer Reaktionszone angeordnet. Die Reaktionszone in dem Oxidationsreaktor ist durch die Strömung des zumindest teilweise entladenen Wasserstoffträgermediums HO-LOHC durch den Oxidationsreaktor 5 vorgegeben. Gemäß Fig. 1 ist die Reaktionszone von rechts nach links orientiert, also von der Zuströmöffnung für das zumindest teilweise entladene Wasserstoffträgermedium HO-LOHC zu der Abströmöffnung.

Der Oxidationsreaktor 5 weist mehrere Oxidationsmittelzugabestellen 10 auf, an welchen jeweils separat und insbesondere unabhängig voneinander Oxidationsmittel in den Oxidationsreaktor 5 zugegeben werden kann. Die Oxidationsmittelzugabestellen 10 sind entlang der Reaktionszone beabstandet zueinander angeordnet. Insbesondere sind die Oxidationsmittelzugabestellen entlang einer Fluidrichtung durch die Reaktionszone hintereinander angeordnet.

Zur dosierten Zugabe des Oxidationsmittels ist an den Oxidationsreaktor 5 eine Dosiereinheit 11 angeschlossen. Die Dosiereinheit 11 weist mehrere Zuführleitungen 12 auf, über die Oxidationsmittel in den Oxidationsreaktor 5 zugegeben werden kann. Jede Zuführleitung 12 ist an eine Oxidationsmittelzugabestelle 10 angeschlossen. Die Zuführleitungen 12 können Ventile, insbesondere regelbare Ventile aufweisen, um eine geregelte Zugabe des Oxidationsmittels in den Oxidationsreaktor 5 zu gewährleisten.

An den Oxidationsreaktor 5 ist ein zweiter Rekuperationsapparat 13 angeschlossen, in dem eine Wärmerückgewinnung eines Gemischs erfolgt, das aus dem Oxidationsreaktor 5 abgeführt worden ist. Der zweite Rekuperationsapparat 13 ist an einen zweiten Trennapparat 14 angeschlossen. Der zweite Trennapparat 14 dient zum Trennen gasförmiger und flüssiger Bestandteile und insbesondere der Abtrennung von Wasser. Der zweite Trennapparat ist über eine Wasserleitung 15 mit einem Elektrolyseur 16 verbunden. Der Elektrolyseur 16 ist mit der Wasserstoffgasverwertungseinheit 7 koppelbar.

An den zweiten Trennapparat 14 ist über eine Gasleitung 17 eine thermische Verwertungseinheit 18 angeschlossen. Zusätzlich weist die Gasleitung 17 eine Abzweigungsleitung auf, über die der zweite Trennapparat 14 an die Dosiereinheit 11 angeschlossen ist. Entlang der Abzweigungsleitung ist insbesondere ein dritter Rekuperationsapparat 19 angeordnet. Der dritte Rekuperationsapparat 19 dient insbesondere zum Vorwärmen des sauerstoffhaltigen Gemischs als Oxidationsmittel.

Es ist denkbar, dass das sauerstoffhaltige Gemisch in der thermischen Verwertungseinheit 18 unmittelbar thermisch verwertet wird. Zusätzlich oder alternativ ermöglicht die Gasleitung 17 und der dritte Rekuperationsapparat 19 einen Kreislaufstrom für das sauerstoffhaltige Gasgemisch. Bei einer Kreislaufströmung für das sauerstoffhaltige Gasgemisch ist der Wärmebedarf für die Vorwärmung in dem dritten Rekuperationsapparat 19 reduziert. Es ist allenfalls eine geringfügige Erwärmung und/oder keine Erwärmung erforderlich. Die Bereitstellung des Oxidationsmittels in der Dosiereinheit 11 ist dadurch vereinfacht.

Der Elektrolyseur 16 kann mittels einer Sauerstoffleitung, insbesondere über den dritten Rekuperationsapparat 19, an die Dosiereinheit 11 angeschlossen sein.

Der zweite Trennapparat 14 ist über eine Wasserstoffträgermediumleitung 20 an einen Hydrierreaktor 21 angeschlossen. Der Hydrierreaktor 21 ist über eine Fluidleitung 22 an eine Reinigungseinheit 23 angeschlossen. Gemäß dem gezeigten Ausführungsbeispiel ist die Reinigungseinheit 23 als Adsorptionseinheit ausgeführt. Die Reinigungseinheit 23 ist über eine Zuführleitung 24 an den Dehydrierreaktor 2 angeschlossen.

Der Hydrierreaktor 21 ist mittels einer weiteren Wasserleitung 15 an einen zweiten Elektrolyseur 25 angeschlossen. Es ist auch möglich, dass der Hydrierreaktor 21 an den Elektrolyseur 16 angeschlossen ist. Der Anlagenaufwand ist dadurch reduziert. Das im Elektrolyseur erzeugte Wasserstoffgas kann der Wasserstoffgasverwertungseinheit 7 und/oder dem Hydrierreaktor 21 zugeführt werden. Das in dem Elektrolyseur 25 erzeugte Sauerstoffgas kann an die Umgebung und/oder an die Dosiereinheit 11 abgegeben werden.

Gemäß dem gezeigten Ausführungsbeispiel sind der Dehydrierreaktor 2 und der Oxidationsreaktor 5 kombiniert ausgeführt und insbesondere ineinander integriert. Der Dehydrierreaktor 2 und der Oxidationsreaktor 5 bilden einen Kombinationsreaktor 26, der in Fig. 1 rein schematisch dargestellt ist. Durch die Ausführung des Kombinationsreaktors 26 ist eine Wärmeübertragung von dem Oxidationsreaktor 5 auf den Dehydrierreaktor 2 verbessert, insbesondere sind Wärmeverluste bei der Wärmeübertragung reduziert.

Die Wärmeübertragung kann insbesondere mittels einer separaten Wärmeübertragungseinheit 27, insbesondere mittels eines Thermalölkreislaufs, erfolgen. Die Wärmeübertragungseinheit 27 ist in Fig. 1 rein symbolisch durch die Wärmeübertragungspfeile gekennzeichnet.

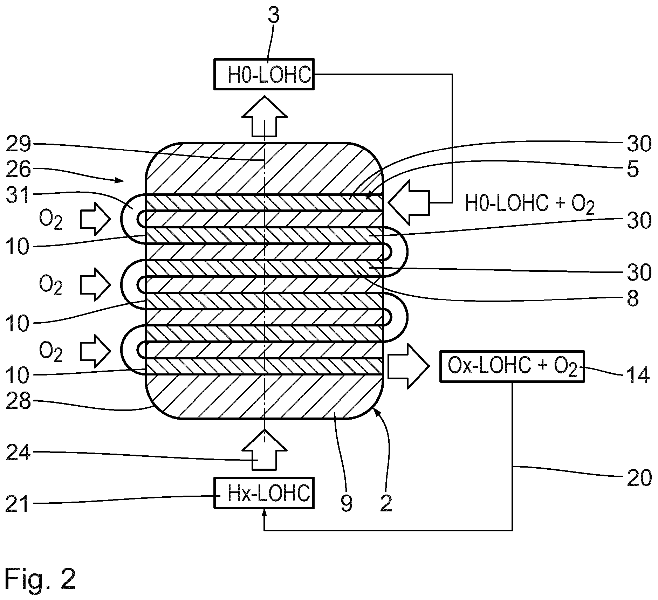

Anhand von Fig. 2 wird im Folgenden ein Ausführungsbeispiel des Kombinationsreaktors 26 näher erläutert. Der Dehydrierreaktor 2 weist ein äußeres Gehäuse 28 auf, in dem der Dehydrierkatalysator 9 angeordnet ist. Das Gehäuse 28 weist eine Längsachse 29 auf, die gemäß dem gezeigten Ausführungsbeispiel vertikal orientiert ist. Die Längsachse 29 kann gegenüber der vertikalen geneigt und insbesondere auch senkrecht dazu, also horizontal, angeordnet sein. Die Zuführleitung 24 ist gemäß Fig. 2 an einer Unterseite an dem Dehydrierreaktor 2 angeschlossen. Die Zuführleitung 24 dient zum Zuführen von zumindest teilweise beladenem Wasserstoffträgermedium (Hx-LOHC), das in dem Hydrierreaktor 21 hydriert, also mit Wasserstoff beladen, worden ist. Hx-LOHC strömt in dem Dehydrierreaktor 2 entlang der Längsachse 29 nach oben. Die Längsachse 29 gibt die Strömungsrichtung für das Medium in dem Dehydrierreaktor 2 vor.

Quer und insbesondere senkrecht zu der Längsachse 29 sind in dem Gehäuse 28 mehrere Oxidationsrohre 30 des Oxidationsreaktors 5 angeordnet. Die Oxidationsrohre 30 sind gemäß dem gezeigten Ausführungsbeispiel horizontal orientiert.

In den Oxidationsrohren 30 ist der Oxidationskatalysator 8 angeordnet.

Die Oxidationsrohre 30 sind entlang einer Fluidströmungsrichtung durch den Oxidationsreaktor 5 hintereinander angeordnet und durch Verbindungsrohre 31 miteinander verbunden. Die Verbindungsrohre 31 sind derart ausgeführt, dass jeweils ein Ende des einen Oxidationsrohres 30 mit dem Beginn eines nachfolgenden Oxidationsrohres 30 verbunden sind. Die Verbindungsrohre 31 sind U-förmig ausgeführt. Die miteinander Verbundenen Oxidationsrohre 30 bilden eine mäanderförmige Oxidationsleitung. Jeweils am Übergang zwischen 2 in Reihe angeordneten Oxidationsrohren 30, insbesondere im Bereich der Verbindungsrohre 31, sind die Oxidationsmittelzugabestellen 10 angeordnet.

Die Oxidationsrohre 30 sind in dem Gehäuse 28 insbesondere in dem Dehydrierkatalysator 9 eingebettet und insbesondere vollständig, also voll umfänglich, von dem Dehydrierkatalysator 9 umgeben.

Die Oxidationsrohre 30 sind vollständig innerhalb des Gehäuses 28 des Dehydrierreaktors 2 angeordnet. Der Oxidationsreaktor 5 wird durch die Gesamtheit der Oxidationsrohre 30 gebildet. Das bedeutet, dass der Oxidationsreaktor 5 in dem Dehydrierreaktor 2 integriert ist. Die Wärmeübertragungseinheit 27 ist bei dieser Ausführungsform durch den Oxidationsreaktor 5, insbesondere die Oxidationsrohre 30, und den Dehydrierreaktor 2, insbesondere den Dehydrierkatalysator 9, gebildet. Für die Wärmeübertragungseinheit 27 sind separate Komponenten entbehrlich. Die Wärmeübertragungseinheit 27 ist integriert ausgeführt. Diese Ausführung ist besonders platzsparend und kompakt. Diese Ausführung der Wärmeübertragungseinheit 27 ist unaufwändig und kosteneffizient.

An einem Ende der mäanderförmigen Oxidationsleitung ist an den Oxidationsreaktor 5 der zweite Trennapparat 14 angeschlossen, der mit dem Hydrierreaktor 21 verbunden ist.

Es ist möglich, die Oxidationsrohre 30 mit einer Vorlaufstrecke auszuführen. Im Bereich der Vorlaufstrecke sind die Oxidationsrohre 30 insbesondere außerhalb des Gehäuses 28 des Dehydrierreaktors 22 angeordnet und insbesondere nicht in dem Dehydrierkatalysator 9 eingebettet. Das bedeutet insbesondere, dass die Oxidationsrohre 30 bereichsweise in den Dehydrierkatalysator 9 eingebettet sind. Es ist beispielsweise denkbar, dass die Oxidationsrohre 30 bezüglich ihrer jeweiligen Rohrlänge nur bereichsweise in dem Dehydrierkatalysator 9 eingebettet sind. Es ist zusätzlich oder alternativ möglich, dass zumindest ein Oxidationsrohr 30 nicht oder zumindest nicht vollständig im Dehydrierkatalysator 9 eingebettet ist. Gleichwohl können andere Oxidationsrohre vollständig in dem Dehydrierkatalysator 9 eingebettet sein.

Die Vorlaufstrecke für die Oxidationsreaktion ermöglicht es insbesondere, dass die Oxidationswärme im Bereich der Vorlaufstrecke zur Erwärmung und Einstellung des Temperaturniveaus auf das der Dehydrierung genutzt werden kann.

Nachfolgend wird das Verfahren zum Bereitstellen von Wasserstoffgas mittels der Anlage 1 näher erläutert.

Das zumindest teilweise beladene Wasserstoffträgermedium Hx-LOHC, das gemäß dem gezeigten Ausführungsbeispiel als eine 30:70 Mischung aus Biphenyl und Diphenylmethan gebildet ist, wird dem Dehydrierreaktor 2 zugeführt und im Dehydrierreaktor 2 durch kontaktieren mit dem Dehydrierkatalysator 9 zumindest teilweise dehydriert. Für die endotherme Dehydrierreaktion wird Wärme mittels der Wärmeübertragungseinheit 27 von dem Oxidationsreaktor 5 bereitgestellt.

Aus dem Dehydrierreaktor 2 wird ein Gemisch dem ersten Trennapparat 3 zugeführt, das freigesetztes Wasserstoffgas und HO-LOHC aufweist. In dem ersten Trennapparat werden insbesondere gasförmige Anteile von dem flüssigen HO-LOHC abgetrennt und der Gasreinigungseinheit 6 zugeführt. Der der Gasreinigungseinheit 6 zugeführte Gasstrom weist neben dem freigesetzten Wasserstoffgas H₂ gasförmige Verunreinigungen auf, insbesondere Kohlenwasserstoffe, die insbesondere höchstens 1000 ppmV betragen. Außerdem kann der Gasstrom geringfügige Anteile an sauerstoffhaltigen Verunreinigungen aufweisen, die höchstens 200 ppmV betragen. Die gasförmigen Verunreinigungen, also die Kohlenwasserstoffe und die sauerstoffhaltigen Verunreinigungen, werden in der Gasreinigungseinheit 6 abgetrennt. Der von der Gasreinigungseinheit 6 an die Wasserstoffgasverwertungseinheit 7 bereitgestellte Wasserstoff weist eine Reinheit von mindestens 99 % auf.

Das in dem ersten Trennapparat 3 abgetrennte HO-LOHC durchläuft den ersten Rekuperationsapparat 4 und wird dem Oxidationsreaktor 5 zugeführt. Der erste Rekuperationsapparat 4 kann auch dem ersten Trennapparat 3 vorgeschaltet sein, also zwischen dem Dehydrierreaktor 2 und dem ersten Trennapparat 3 angeordnet sein. Es ist auch denkbar, den ersten Rekuperationsapparat 4 in dem ersten Trennapparat 3 integriert anzuordnen. Bei der integrierten Anordnung können die heißen Wärmeströme des Wasserstoffgases und/oder des HO-LOHC effizient und insbesondere gleichzeitig voneinander separiert werden und Wärme an die kälteren Stoffströme abgeben.

Dadurch, dass im Dehydrierreaktor 2 eine selektive Dehydrierung stattgefunden hat, sind LOHC-Spaltprodukte und/oder hoch siedende Nebenprodukte, die oxidativ weniger gut verwertbar sind, in dem Oxidationsreaktor 5 zugeführten Stoffstrom reduziert, also verringert. Die LOHC-Spaltprodukte und die hoch siedenden Nebenprodukte führen zu einer Reduktion der Wärmefreisetzung und sind deshalb unerwünscht. Durch deren Reduktion können unerwünschte Oxidationen verhindert werden, die zu einer unerwünschten Erhöhung der sauerstoffhaltigen Verunreinigungen in dem Stoffstrom führen. Dadurch, dass sauerstoffhaltige Verunreinigungen in dem Wasserstoffträgermedium vermieden werden, ist der Anteil von sauerstoffhaltigen Verunreinigungen in dem freigesetzten Wasserstoffgas reduziert, also verringert. Die nachgelagerte Reinigung in der Gasreinigungseinheit 6 ist dadurch mit reduziertem Aufwand möglich.

In dem Oxidationsreaktor 5 erfolgt insbesondere die selektive Oxidation des HO-LOHC, insbesondere von funktionellen Alkylgruppen und/oder Alkylengruppen, insbesondere R-CH₃ oder R₁-CH₂-R₂.

Für die Durchführung der Oxidationsreaktion in dem Oxidationsreaktor 5 ist die Zuführung eines Oxidationsmittels, insbesondere Sauerstoff oder Luft, insbesondere mit der Dosiereinheit 11 erforderlich. Die Oxidationsreaktion ist exotherm. Die dabei erzeugte Wärme wird zumindest anteilig und insbesondere vollständig von dem Oxidationsreaktor 5 auf den Dehydrierreaktor 2 übertragen. Für die Wärmeübertragung dient die Wärmeübertragungseinheit 27.

Es wurde erkannt, dass die Reaktionsbedingungen im Oxidationsreaktor 5, also die Oxidationsbedingungen, dadurch verbessert sind, dass das Oxidationsmittel an unterschiedlichen Orten entlang der Reaktionszone zugegeben werden kann. Dazu dienen die Oxidationsmittelzugabestellen 10. Es ist dadurch insbesondere möglich, die Sauerstoffkonzentration entlang der Reaktionszone gezielt einzustellen. Es wurde gefunden, dass die Steuerung der Sauerstoffkonzentration insbesondere in direktem Zusammenhang mit dem Umsatz und insbesondere mit der Selektivität der Oxidation des H0-LOHC steht. Untersuchungen haben gezeigt, dass eine im Wesentlichen homogene Verteilung der Sauerstoffkonzentration entlang der Reaktionszone vorteilhaft ist.

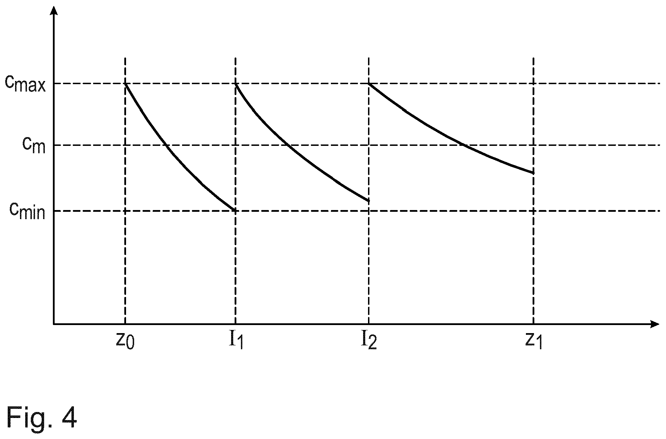

Exemplarisch ist in Fig. 4 der funktionelle Zusammenhang der Sauerstoffkonzentration c über die Reaktionszone dargestellt. Die Reaktionszone beginnt bei z₀ und endet bei z₁, wobei schematisch zwei Oxidationsmittelzugabestellen 10 in Fig. 4 als I₁ und als I₂ dargestellt sind. Die Sauerstoffkonzentration in der Reaktionszone weist zu Beginn der Reaktionszone z₀ einen Maximalwert cₘₐₓ auf, wobei die Sauerstoffkonzentration dann exponentiell bis zu der ersten Oxidationsmittelzugabestelle I₁ abnimmt. Dort wird die Sauerstoffkonzentration durch die Oxidationsmittelzugabestelle I₁ wieder bis zu dem Maximalwert cₘₐₓ angehoben, gefolgt von einem erneuten exponentiellen Abfall bis zu der zweiten Oxidationsmittelzugabestelle I₂, wo wieder eine Anhebung auf den Maximalwert cₘₐₓ erfolgt. Es resultiert ein Mittelwert für die Sauerstoffkonzentration cₘ, der in Fig. 4 ebenfalls dargestellt ist. Unter einer homogenen Verteilung des Konzentrationsprofils entlang der Reaktionszone ist deshalb zu verstehen, dass sich der Wert der Sauerstoffkonzentration in einem Toleranzbereich um den Mittelwert cₘ bewegt, wobei der Toleranzbereich festgelegt wird durch den Maximalwert cₘₐₓ und den Minimalwert cₘᵢₙ. Eine homogene Verteilung des Konzentrationsprofils liegt insbesondere dann vor, wenn der Maximalwert cₘₐₓ zwischen 110 % und 150 %, insbesondere zwischen 115 % und 140 % und insbesondere zwischen 120 % und 130 % des Mittelwerts cₘ und der Minimalwert cₘᵢₙ zwischen 0,5 und 0,9 des Mittelwerts, insbesondere zwischen 0,6 und 0,85 und insbesondere zwischen 0,65 und 0,75 des Mittelwerts beträgt.

Es wurde gefunden, dass die Sauerstoffkonzentration c für die Selektivität der Oxidationsreaktion und insbesondere der gewünschten, selektiven Umsetzung von funktionellen Alkylengruppen entscheidend sein kann. Vorteilhaft ist es, wenn die initiale Sauerstoffkonzentration, also zu Beginn der Reaktionszone, einen hohen Wert annimmt. Daraus ergibt sich eine hohe Produktivität der Oxidationsreaktion. Eine hohe Produktivität bedeutet aber auch eine erhöhte Nebenproduktbildung. Eine niedrige initiale Sauerstoffkonzentration führt zu einer höheren Selektivität. Durch die selektive Zudosierung von Sauerstoff entlang der Reaktionszone kann deshalb die Produktivität insgesamt gesteigert werden, also die mittlere Sauerstoffkonzentration cₘ, wobei gleichzeitig die initiale Konzentration cₘₐₓ reduziert werden kann, insbesondere im Vergleich zu einer nur einmaligen Sauerstoffzuführung mit einem exponentiellen Abfall der Sauerstoffkonzentration über die Reaktionszone. Insbesondere kann die Produktivität der Oxidationsreaktion aufgrund der höheren Durchschnittskonzentration cₘ erhöht werden. Aufgrund des erhöhten Umsatzes bei der Oxidationsreaktion folgt eine erhöhte Reaktionsexothermie, also eine erhöhte Erzeugung von Wärme, die für die Dehydrierungsreaktion bereitgestellt werden kann. Insbesondere wurde gefunden, dass die gleichmäßigere Sauerstoffkonzentration durch die mehreren Oxidationsmittelzugabestellen 10 eine gleichmäßigere Freisetzung der Reaktionswärme entlang der Reaktionszone bewirkt. Zudem ist eine gezielte Temperaturregelung entlang der Reaktionszone möglich.

Die durch die Oxidationsreaktion in dem Oxidationsreaktor 5 freigesetzte Wärme wird der Dehydrierung in dem Dehydrierreaktor 2 zugeführt. Dazu kann der Oxidationsreaktor 5, wie in Fig. 2 dargestellt, in den Dehydrierreaktor 2 integriert sein. Bei der integrierten Ausführung ist insbesondere ein hochvolumiger Oxidationsreaktor 5 mit mehreren Oxidationsrohren 30 von Vorteil, wobei die Strömungsrichtung durch den Oxidationsreaktor 5 insbesondere im Gegenstrom oder, wie in Fig. 2 dargestellt wird, im Kreuzstrom bezüglich der Fluidströmungsrichtung durch den Dehydrierreaktor 2 erfolgt. Vorteilhaft ist es, wenn die Reaktionstemperatur im Oxidationsreaktor mindestens 10° K, insbesondere mindestens 20° K, insbesondere mindestens 30° K und insbesondere mindestens 50° K oberhalb der Reaktionstemperatur des Dehydrierreaktors beträgt.

Im Anschluss an die Oxidationsreaktion im Oxidationsreaktor 5 werden die Stoffströme in dem mindestens zweiten Trennapparat 14 voneinander getrennt und in dem zweiten Rekuperationsapparat 13 rekuperiert, also Wärme, insbesondere zur Vorwärmung anderer Stoffströme, rückgewonnen. Wie bei dem ersten Rekuperationsapparat 4 und dem ersten Trennapparat 3 kann auch bei dem zweiten Rekuperationsapparat 13 und dem zweiten Trennapparat 14 die Reihenfolge unterschiedlich gewählt werden. Insbesondere kann der zweite Rekuperationsapparat 13 in dem zweiten Trennapparat 14 integriert angeordnet sein. In dem zweiten Trennapparat 14 werden insbesondere die flüssigen Anteile, insbesondere Wasser und zumindest teilweise oxidiertes Wasserstoffträgermedium Ox-LOHC, von den gasförmigen Bestandteilen, insbesondere Luft und insbesondere Sauerstoff, getrennt. Dabei können Verunreinigungen und Nebenprodukte in den getrennten Stoffströmen höchstens 5 %, insbesondere höchstens 3 %, insbesondere höchstens 1 % und insbesondere höchstens 1000 ppmV noch enthalten sein. In dem Oxidationsreaktor 5 wird Wasser als Nebenprodukt mindestens äquimolar gebildet. Besonders vorteilhaft ist es, wenn Wasser in dem zweiten Trennapparat 14 von dem Ox-LOHC abgetrennt, aufgereinigt und entsorgt wird.

Im Oxidationsreaktor 5 gebildetes Wasser kann zusätzlich oder alternativ mittels der Wasserleitung 15 dem Elektrolyseur 16 zur Verfügung gestellt werden. In dem Elektrolyseur 16 wird das Wasser in seine Bestandteile aufgetrennt, wobei das freigesetzte Wasserstoffgas der Wasserstoffgasverwertungseinheit 7 zur Verfügung gestellt werden kann. Das freigesetzte Sauerstoffgas kann an die Dosiereinheit 11 rückgeführt werden. Überraschend wurde gefunden, dass das abgetrennte Wasser vorteilhaft für die Elektrolyse genutzt werden kann. Der für die Elektrolyse erforderliche Energiebedarf kann durch externe Energiezugabe und/oder energetische Kopplung mit der exothermen Oxidationsreaktion zumindest anteilig gedeckt werden.

Der in dem zweiten Trennapparat 14 separierte Gasanteil, insbesondere Sauerstoff, insbesondere Luft, kann mit Anteilen an Kohlenstoffverbindungen in der thermischen Verwertungseinheit 18 thermisch verwertet werden. Die freigesetzte Wärme kann beispielsweise dem Dehydrierreaktor 2 zur Verfügung gestellt werden. Es ist insbesondere auch erdenkbar, den abgetrennten Gasstrom unmittelbar an die Umgebung abzugeben, wenn toxisch bedenkliche Kohlenstoffverbindungen wie beispielsweise Benzol mittels einer nicht separat dargestellten Reinigungseinheit noch abgereinigt werden. Der abgetrennte Gasstrom aus dem zweiten Trennapparat 14 kann aber auch für die Oxidationsreaktion der Dosiereinheit 11 zur Verfügung gestellt werden.

Der von Wasser abgetrennte Anteil an Ox-LOHC wird dem Dehydrierreaktor 21 zur Hydrierung zugeführt. Vorteilhaft ist es, wenn der Hydrierreaktor 21 und der Dehydrierreaktor 2 an unterschiedlichen, insbesondere räumlich zueinander entfernten Orten angeordnet sind. Der Hydrierreaktor 21 ist insbesondere an einem energiereichen Ort, also an dem Energieüberschuss besteht und insbesondere Energie zu vergleichsweise günstigen Konditionen zur Verfügung steht, angeordnet. Der Dehydrierreaktor 2 ist insbesondere an einem energiearmen Ort, an dem ein Energiebedarf besteht und Energie insbesondere zu kostenintensiven Bedingungen zur Verfügung steht, angeordnet. Der Transport des Wasserstoffträgermediums Hx-LOHC von dem energiereichen zu dem energiearmen Ort und der Transport von dem oxidierten Wasserstoffträgermedium Ox-LOHC von dem energiearmen zu dem energiereichen Ort kann mit geeigneten Transportfahrzeugen wie Tankkraftwagen, Schiffen und/oder Zügen, aber auch mittels einer dafür vorgesehenen Leitung erfolgen.

Insbesondere wurde gefunden, dass der Transport des Ox-LOHC unkompliziert möglich ist, da Ox-LOHC mit sauerstoffhaltigen Verunreinigungen, insbesondere Wasser, sauerstoffhaltige Kohlenstoffverbindungen und/oder physikalisch gelöste Gase, im Wesentlichen gesättigt ist. Es besteht insbesondere kein Bedarf, den Transport unter sicherheitstechnisch relevanten, kontrollierten Bedingungen durchzuführen. Der Transport ist dadurch vereinfacht. Weitere Kontamination mit Luft, Sauerstoff oder Wasser ist unwahrscheinlich. Insbesondere ist eine kostenaufwendige Sicherung des Ox-LOHC, insbesondere in Form einer Inertgasüberlagerung, insbesondere mittels Stickstoff, nicht erforderlich oder hinsichtlich bestehender Verunreinigungen, die zu einem späteren Zeitpunkt ohnehin entfernt werden, weniger relevant.

Es ist wurde insbesondere gefunden, dass Wasser, das insbesondere bei der Oxidation des LOHC gebildet worden ist, zusammen mit dem oxidierten Wasserstoffträgermedium Ox-LOHC zu dem energiereichen Ort transportiert werden kann. Der Transport erfolgt insbesondere in einem Tankkraftwagen. Für den Transport des Ox-LOHC mit dem Wasser ist das gleiche Volumen ausreichend, wie für den Transport des entladenen Wasserstoffträgermediums HO-LOHC. Es wurde also gefunden, dass trotz der Bildung von Wasser kein zusätzlicher Transportaufwand erforderlich ist, wenn das Wasser zu dem energiereichen Ort transportiert wird, also insbesondere keine weitere Nutzung und/oder Behandlung des Wassers am energiearmen Ort erfolgt. Der Transport des Wassers zu dem energiereichen Ort ist insofern unproblematisch und insbesondere nicht mit zusätzlichem Aufwand verbunden, da am energiereichen Ort ohnehin eine Trennung von Wasser und dem Wasserstoffträgermedium erfolgt, da bei der Reduktion von oxidiertem Wasserstoffträgermedium Ox-LOHC Wasser gebildet wird.

Vorteilhaft ist es, wenn nach der Hydrierreaktion im Hydrierreaktor 2 eine Sauerstoffkontamination des Hx-LOHC vermieden wird, um die Einbringung von sauerstoffhaltigen Verbindungen in den Dehydrierreaktor 2 zu vermeiden.

Ox-LOHC wird dem Hydrierreaktor 21 zugegeben und mittels Wasserstoffgas H₂ chemisch reduziert. Dabei wird Ox-LOHC in Hx-LOHC unter Freisetzung von Wärme umgesetzt. Sauerstoffhaltige Verunreinigungen werden ebenfalls unter Freisetzung von Wärme umgesetzt. Bei der chemischen Reduzierung der funktionellen, sauerstoffhaltigen Gruppen wird Wasser äquimolar erzeugt.

In der Reinigungseinheit 23, die dem Hydrierkatalysator 21 nachgelagert ist, wird Hx-LOHC konditioniert und insbesondere von sauerstoffhaltigen Verunreinigungen, insbesondere nicht umgesetzte, sauerstoffhaltige Kohlenstoffverbindungen, insbesondere Ox-LOHC und/oder weitere oxidierte Kohlenstoffverbindungen und/oder Wasser abgetrennt werden. In der Reinigungseinheit 23 werden insbesondere auch gelöste sauerstoffhaltige Gase aus dem Hx-LOHC abgetrennt. Überraschend wurde gefunden, dass die effiziente Entfernung der sauerstoffhaltigen Verunreinigungen im Hx-LOHC nach der Hydrierung, insbesondere durch eine Reinigungseinheit in Form eines Abscheiders für Wasserverunreinigungen, einer Strip-Kolonne und/oder einer adsorptiven Filterstufe realisierbar sind. Die Abreinigung dieser Verunreinigungen ist unkompliziert möglich. Der Aufwand für die Abreinigung ist reduziert. Dadurch wird für die nachfolgende Hydrierung in der Hydriereinheit 21 Hx-LOHC mit einer Reinheit bereitgestellt, die eine anschließende Konditionierung des freigesetzten Wasserstoffgases, insbesondere in Bezug auf sauerstoffhaltige Verunreinigungen, vereinfacht und insbesondere unerheblich macht.

Es ist denkbar, zusätzlich oder alternativ zu der Reinigungseinheit 23 eine weitere Reinigungseinheit zur Entfernung sauerstoffhaltiger Verunreinigungen, insbesondere am energiereichen Ort, vorzusehen, die den Hydrierreaktor 21 vorgeschaltet ist. Bei der vorgeschalteten Reinigungseinheit erfolgt eine selektive Entfernung sauerstoffhaltiger Verunreinigungen. Insbesondere ermöglicht die vorgeschaltete Reinigungseinheit einen Schutz des Hydrierkatalysators in dem Hydrierreaktor 21.

Denkbar ist auch, eine Reinigungseinheit am energiearmen Ort, dem Dehydrierreaktor 2 unmittelbar vorgeschaltet, vorzusehen.

Das mittels der Reinigungseinheit 23 abgetrennte Wasser kann dem Elektrolyseur 25 oder dem Elektrolyseur 16 zur Spaltung zugeführt werden.

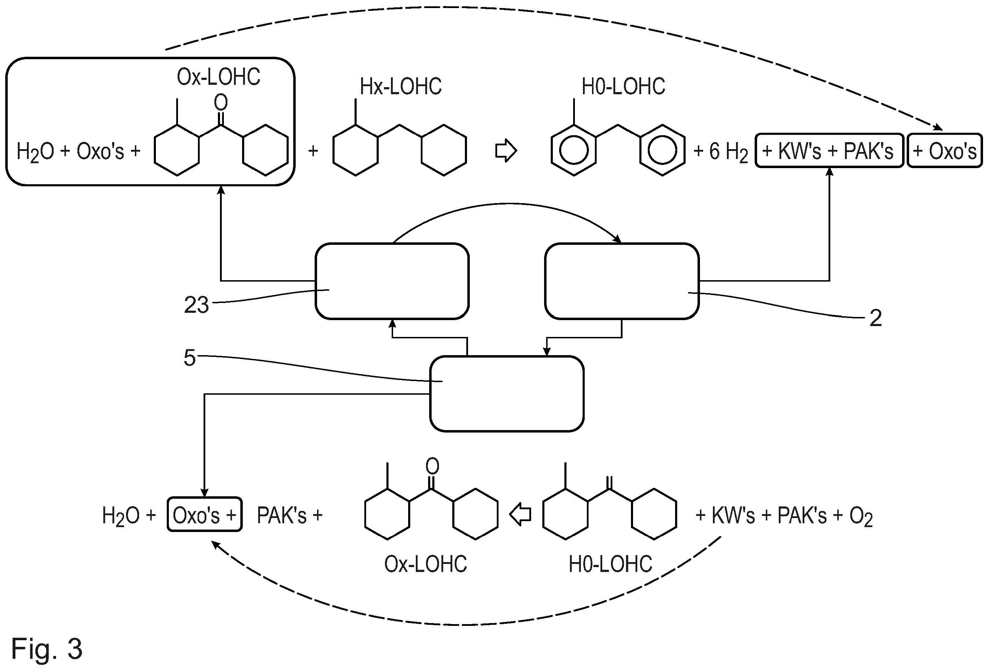

Anhand von Fig. 3 sind die in den relevanten Einheiten, also in dem Dehydrierreaktor 2, dem Oxidationsreaktor 5 und der Reinigungseinheit 23 gebildeten bzw. umgesetzten Stoffströme. Daraus wird ersichtlich, dass in dem Dehydrierreaktor 2 mittels des sulfidierten Dehydrierkatalysators 9 das zumindest teilweise beladene Wasserstoffträgermedium Hx-LOHC zu dem zumindest teilweise entladenen Wasserstoffträgermedium HO-LOHC unter Wasserstofffreisetzung dehydriert wird. Zusätzlich sind in dem aus dem Dehydrierreaktor 2 abgegebenen Stoffstrom Kohlenwasserstoffe (KW's) wie Toluol und/oder Cyclohexan, polyaromatische Kohlenwasserstoffe (PAK's) wie Naphthalin und/oder Anthrazen, sowie oxidierte Kohlenstoffe (Oxo's), insbesondere Oxokohlenstoffe, die ausschließlich aus Kohlenstoff und Sauerstoff bestehen, wie Kohlenstoffmonoxid (CO) und Kohlenstoffdioxid (CO₂), und insbesondere oxidierte Kohlenwasserstoffe, wie Benzaldehyd, enthalten. Insbesondere der Anteil der Oxo's ist wesentlich von der vorangegangenen adsorptiven Aufreinigung in der Reinigungseinheit 23 abhängig. Dadurch, dass in der Reinigungseinheit 23 der Anteil von Wasser, Oxo's und/oder Ox-LOHC reduziert, also verringert, wird, ist auch der Anteil der Oxo's in dem vom Dehydrierreaktor 2 abgegebenen Stoffgemisch reduziert, also verringert.

Bei der Oxidationsreaktion im Oxidationsreaktor 5 mittels der Sauerstoffdosierung wird HO-LOHC in Ox-LOHC umgesetzt, insbesondere unter Bildung von Wasser und Oxo's, die chemisch reduziert werden.

## Patentansprüche

1. Verfahren zum Bereitstellen von Wasserstoffgas umfassend die Verfahrensschritte
- Freisetzen von Wasserstoffgas (H₂) in einem Dehydrierreaktor (2) durch katalytisches Dehydrieren eines zumindest teilweise beladenen Wasserstoffträgermediums (Hx-LOHC) in zumindest teilweise entladenes Wasserstoffträgermedium (H0-LOHC),
- katalytisches Oxidieren des zumindest teilweise entladenen Wasserstoffträgermediums (H0-LOHC) mittels eines Oxidationsmittels zu einem zumindest teilweise oxidierten Wasserstoffträgermedium (Ox-LOHC) in einem Oxidationsreaktor (5),
- Reduzierung des zumindest teilweise oxidierten Wasserstoffträgermediums (Ox-LOHC) zu dem zumindest teilweise beladenen Wasserstoffträgermedium (Hx-LOHC) durch katalytisches Hydrieren in einem Hydrierreaktor (21),
- Entfernen mindestens einer sauerstoffhaltigen Verunreinigung aus dem zumindest teilweise beladenen Wasserstoffträgermedium (Hx-LOHC) und/oder aus dem zumindest teilweise oxidierten Wasserstoffträgermediums (Ox-LOHC).

2. Verfahren gemäß Anspruch 1, **gekennzeichnet durch** Übertragen von in dem Oxidationsreaktor (5) erzeugter Wärme zu dem Dehydrierreaktor (2).

3. Verfahren gemäß einem der vorstehenden Ansprüche, **gekennzeichnet durch** Verwenden eines Dehydrierkatalysators (9) mit einem metallischen Katalysatormaterial, insbesondere Platin, Palladium, Nickel, Rhodium und/oder Ruthenium, das insbesondere sulfidiert ist.

4. Verfahren gemäß einem der vorstehenden Ansprüche, **dadurch gekennzeichnet, dass** das katalytische Oxidieren ein selektives Oxidieren einer funktionellen Alkylgruppe (R-CH₃) und/oder einer funktionellen Alkylengruppe (R₁-CH₂-R₂) des zumindest teilweise entladenen Wasserstoffträgermediums (H0-LOHC) umfasst.

5. Verfahren gemäß einem der vorstehenden Ansprüche, **gekennzeichnet durch** dosiertes Zugeben des Oxidationsmittels zur gezielten Einstellung einer Sauerstoffkonzentration entlang einer Reaktionszone im Oxidationsreaktor (5), insbesondere mittels mehrerer, entlang der Reaktionszone beabstandet angeordnete Oxidationsmittelzugabestellen (10).

6. Verfahren gemäß einem der vorstehenden Ansprüche, **gekennzeichnet durch,** insbesondere thermisches, Verwerten des aus dem Oxidationsreaktor (5) abgeführten Oxidationsmittels in einer thermischen Verwertungseinheit (18).

7. Verfahren gemäß einem der vorstehenden Ansprüche, **dadurch gekennzeichnet, dass** als Hx-LOHC aromatische Kohlenwasserstoffe, insbesondere deren hydrierte Form, insbesondere mit einer funktionellen Methylengruppe dienen, insbesondere eine Mischung aus Biphenyl und Diphenylmethan, insbesondere mit einem Verhältnis von 40 : 60, insbesondere von 35 : 65 und insbesondere von 30 : 70.

8. Verfahren gemäß einem der vorstehenden Ansprüche, **dadurch gekennzeichnet, dass** die Reaktionstemperatur (Tₒₓ) beim Oxidieren größer ist als die Reaktionstemperatur (T_{de}) beim Dehydrieren, wobei insbesondere gilt Tₒₓ ≥ 10 °K+T_{de}, insbesondere Tₒₓ ≥ 20 °K+T_{de}, insbesondere Tₒₓ ≥ 30 °K+T_{de} und insbesondere Tₒₓ ≥ 50 °K+T_{de}.

9. Anlage zum Bereitstellen von Wasserstoffgas umfassend
- einen Dehydrierreaktor (2) zum Freisetzen von Wasserstoffgas (H₂) durch katalytisches Dehydrieren eines zumindest teilweise beladenen Wasserstoffträgermediums (Hx-LOHC) mittels eines Dehydrierkatalysators (9) in zumindest teilweise entladenes Wasserstoffträgermedium (H0-LOHC),
- einen Oxidationsreaktor (5) zum katalytisches Oxidieren des zumindest teilweise entladenen Wasserstoffträgermediums (H0-LOHC) mittels eines Oxidationsmittels zu einem zumindest teilweise oxidierten Wasserstoffträgermedium (Ox-LOHC),
- einen Hydrierreaktor (21) zum Reduzieren des zumindest teilweise oxidierten Wasserstoffträgermediums (Ox-LOHC) zu dem zumindest teilweise beladenen Wasserstoffträgermedium (Hx-LOHC) durch katalytisches Hydrieren,
- eine Reinigungseinheit (23) zum Entfernen mindestens einer sauerstoffhaltigen Verunreinigung aus dem zumindest teilweise beladenen Wasserstoffträgermedium (Hx-LOHC) und/oder aus dem zumindest teilweise oxidierten Wasserstoffträgermedium (Ox-LOHC).

10. Anlage gemäß Anspruch 9, **dadurch gekennzeichnet, dass** die Reinigungseinheit (23) als Adsorptionseinheit ausgeführt ist.

11. Anlage gemäß Anspruch 9 oder 10, **dadurch gekennzeichnet, dass** der Oxidationsreaktor (5) mindestens eine Oxidationsmittelzugabestelle (10), insbesondere mehrere entlang einer Reaktionszone im Oxidationsreaktor (5) beabstandet angeordnete Oxidationsmittelzugabestellen (10), aufweist zum gezielten Einstellen einer Sauerstoffkonzentration entlang der Reaktionszone.

12. Anlage gemäß einem der Ansprüche 9 bis 11, **dadurch gekennzeichnet, dass** der Oxidationsreaktor (5) zumindest teilweise in dem Dehydrierreaktor (2) integriert ist, wobei insbesondere der Oxidationsreaktor (5) mindestens ein Oxidationsrohr (30) aufweist, in dem die Oxidationsreaktion stattfindet, wobei das mindestens eine Oxidationsrohr (30), insbesondere vollständig, innerhalb des Dehydrierreaktors (2) angeordnet ist.

13. Anlage gemäß Anspruch 12, **dadurch gekennzeichnet, dass** der Oxidationsreaktor (5) mehrere Oxidationsrohre (30) aufweist, die insbesondere entlang einer Fluidströmungsrichtung durch den Oxidationsreaktor (5) in Reihe angeordnet sind, wobei insbesondere mindestens eine Oxidationsmittelzugabestelle (10) am Übergang zwischen zwei in Reihe angeordneten Oxidationsrohren (30) angeordnet ist.

## Claims

1. A method for providing hydrogen gas comprising the method steps of
- release of hydrogen gas (H₂) in a dehydrogenation reactor (2) by catalytic dehydrogenation of an at least partially charged hydrogen carrier medium (Hx-LOHC) to form an at least partially discharged hydrogen carrier medium (H0-LOHC),
- catalytic oxidation of the at least partially discharged hydrogen carrier medium (H0-LOHC) by means of an oxidizing agent to form an at least partially oxidized hydrogen carrier medium (Ox-LOHC) in an oxidation reactor (5),
- reduction of the at least partially oxidized hydrogen carrier medium (Ox-LOHC) to form the at least partially charged hydrogen carrier medium (Hx-LOHC) by catalytic hydrogenation in a hydrogenation reactor (21),
- removal of at least one oxygen-containing impurity from the at least partially charged hydrogen carrier medium (Hx-LOHC) and/or from the at least partially oxidized hydrogen carrier medium (Ox-LOHC).

2. A method according to claim 1, **characterized by** transferring heat generated in the oxidation reactor (5) to the dehydrogenation reactor (2).

3. A method according to any one of the preceding claims, **characterized by** using a dehydrogenation catalyst (9) comprising a metallic catalyst material, in particular platinum, palladium, nickel, rhodium and/or ruthenium, which is in particular sulphidized.

4. A method according to any one of the preceding claims, **characterized in that** the catalytic oxidation comprises selectively oxidizing an alkyl functional group (R-CH₃) and/or an alkylene functional group (R₁-CH₁₂-R₂) of the at least partially discharged hydrogen carrier medium (H0-LOHC).

5. A method according to any one of the preceding claims, **characterized by** the dosed addition of the oxidizing agent for the targeted adjustment of an oxygen concentration along a reaction zone in the oxidation reactor (5), in particular by means of a plurality of oxidizing agent addition points (10) arranged at intervals along the reaction zone.

6. A method according to any one of the preceding claims, **characterized by,** in particular thermal, utilization of the oxidizing agent discharged from the oxidation reactor (5) in a thermal utilization unit (18).

7. A method according to any one of the preceding claims, **characterized in that** aromatic hydrocarbons, in particular their hydrogenated form, in particular with a methylene functional group, in particular a mixture of biphenyl and diphenylmethane, in particular with a ratio of 40:60, in particular 35:65 and in particular 30:70, serve as Hx-LOHC.

8. A method according to any one of the preceding claims, **characterized in that** the reaction temperature (Tₒₓ) during oxidation is greater than the reaction temperature (T_{de}) during dehydrogenation, wherein in particular Tₒₓ ≥ 10 °K+T_{de}, in particular Tₒₓ ≥ 20 °K+T_{de}, in particular Tₒₓ ≥ 30 °K+T_{de} and in particular Tₒₓ ≥ 50 °K+T_{de}.

9. A sytem for providing hydrogen gas comprising
- a dehydrogenation reactor (2) for releasing hydrogen gas (H₂) by catalytic dehydrogenation of an at least partially charged hydrogen carrier medium (Hx-LOHC) by means of a dehydrogenation catalyst (9) into at least partially discharged hydrogen carrier medium (H0-LOHC),
- an oxidation reactor (5) for catalytically oxidizing the at least partially discharged hydrogen carrier medium (H0-LOHC) by means of an oxidizing agent to an at least partially oxidized hydrogen carrier medium (Ox-LOHC),
- a hydrogenation reactor (21) for reducing the at least partially oxidized hydrogen carrier medium (Ox-LOHC) to the at least partially charged hydrogen carrier medium (Hx-LOHC) by catalytic hydrogenation,
- a purification unit (23) for removing at least one oxygen-containing impurity from the at least partially charged hydrogen carrier medium (Hx-LOHC) and/or from the at least partially oxidized hydrogen carrier medium (Ox-LOHC).

10. A system according to claim 9, **characterized in that** the purification unit (23) is designed as an adsorption unit.

11. A system according to claim 9 or 10, **characterized in that** the oxidation reactor (5) has at least one oxidizing agent addition point (10), in particular a plurality of oxidizing agent addition points (10) arranged to be spaced apart along a reaction zone in the oxidation reactor (5), for selectively adjusting an oxygen concentration along the reaction zone.

12. A system according to any one of claims 9 to 11, **characterized in that** the oxidation reactor (5) is at least partially integrated in the dehydrogenation reactor (2), wherein in particular the oxidation reactor (5) has at least one oxidation tube (30) in which the oxidation reaction takes place, wherein the at least one oxidation tube (30) is arranged, in particular completely, inside the dehydrogenation reactor (2).

13. A system according to claim 12, **characterized in that** the oxidation reactor (5) comprises a plurality of oxidation tubes (30) which are arranged in series, in particular along a fluid flow direction through the oxidation reactor (5), wherein in particular at least one oxidizing agent addition point (10) is arranged at the transition between two oxidation tubes (30) arranged in series.

## Revendications

1. Procédé de fourniture d'hydrogène gazeux comprenant les étapes suivantes :
- libération d'hydrogène gazeux (H₂) dans un réacteur de déshydrogénation (2) par déshydrogénation catalytique d'un milieu porteur d'hydrogène (Hx-LOHC) au moins partiellement chargé pour obtenir un milieu porteur d'hydrogène (H0-LOHC) au moins partiellement déchargé,
- oxydation catalytique du milieu porteur d'hydrogène au moins partiellement déchargé (H0-LOHC) au moyen d'un agent oxydant pour obtenir un milieu porteur d'hydrogène au moins partiellement oxydé (Ox-LOHC) dans un réacteur d'oxydation (5),
- réduction du milieu porteur d'hydrogène au moins partiellement oxydé (Ox-LOHC) pour obtenir le milieu porteur d'hydrogène au moins partiellement chargé (Hx-LOHC) par hydrogénation catalytique dans un réacteur d'hydrogénation (21),
- élimination d'au moins une impureté contenant de l'oxygène du milieu porteur d'hydrogène au moins partiellement chargé (Hx-LOHC) et/ou du milieu porteur d'hydrogène au moins partiellement oxydé (Ox-LOHC).

2. Procédé selon la revendication 1, **caractérisé par** un transfert de la chaleur générée dans le réacteur d'oxydation (5) vers le réacteur de déshydrogénation (2).

3. Procédé selon l'une des revendications précédentes, **caractérisé par** l'utilisation d'un catalyseur de déshydrogénation (9) comportant un matériau catalyseur métallique, en particulier du platine, du palladium, du nickel, du rhodium et/ou du ruthénium, qui est en particulier sulfuré.

4. Procédé selon l'une des revendications précédentes, **caractérisé en ce que** l'oxydation catalytique comprend une oxydation sélective d'un groupe alkyle fonctionnel (R-CH₃) et/ou d'un groupe alkylène fonctionnel (R₁-CH₂-R₂) du milieu porteur d'hydrogène (H0-LOHC) au moins partiellement déchargé.

5. Procédé selon l'une des revendications précédentes, **caractérisé par** l'ajout dosé de l'agent oxydant pour le réglage ciblé d'une concentration en oxygène le long d'une zone de réaction dans le réacteur d'oxydation (5), en particulier au moyen de plusieurs points d'ajout d'agent oxydant (10) disposés à distance les uns des autres le long de la zone de réaction.

6. Procédé selon l'une des revendications précédentes, **caractérisé par** la valorisation, en particulier thermique, de l'agent oxydant évacué du réacteur d'oxydation (5) dans une unité de valorisation thermique (18).

7. Procédé selon l'une des revendications précédentes, **caractérisé en ce que** l'on utilise comme Hx-LOHC des hydrocarbures aromatiques, en particulier leur forme hydrogénée, en particulier comportant un groupe méthylène fonctionnel, en particulier un mélange de biphényle et de diphénylméthane, dans un rapport de 40 : 60, en particulier de 35 : 65 et en particulier de 30 : 70.

8. Procédé selon l'une des revendications précédentes, **caractérisé en ce que** la température de réaction (Tₒₓ) lors de l'oxydation est supérieure à la température de réaction (T_{de}) lors de la déshydrogénation, dans lequel en particulier Tₒₓ ≥ 10 °K + T_{de}, en particulier Tₒₓ ≥ 20 °K + T_{de}, en particulier Tₒₓ ≥ 30 °K + T_{de}, et en particulier Tₒₓ ≥ 50 °K + T_{de}.

9. Installation pour la fourniture d'hydrogène gazeux comprenant :
- un réacteur de déshydrogénation (2) pour libérer de l'hydrogène gazeux (H₂) par déshydrogénation catalytique d'un milieu porteur d'hydrogène (Hx-LOHC) au moins partiellement chargé au moyen d'un catalyseur de déshydrogénation (9) pour obtenir un milieu porteur d'hydrogène (H0-LOHC) au moins partiellement déchargé,
- un réacteur d'oxydation (5) pour oxyder par voie catalytique le milieu porteur d'hydrogène au moins partiellement déchargé (H0-LOHC) au moyen d'un agent oxydant pour obtenir un milieu porteur d'hydrogène au moins partiellement oxydé (Ox-LOHC),
- un réacteur d'hydrogénation (21) pour réduire le milieu porteur d'hydrogène au moins partiellement oxydé (Ox-LOHC) pour obtenir le milieu porteur d'hydrogène au moins partiellement chargé (Hx-LOHC) par hydrogénation catalytique,
- une unité de purification (23) pour éliminer au moins une impureté contenant de l'oxygène du milieu porteur d'hydrogène au moins partiellement chargé (Hx-LOHC) et/ou du milieu porteur d'hydrogène au moins partiellement oxydé (Ox-LOHC).

10. Installation selon la revendication 9, **caractérisée en ce que** l'unité de purification (23) est réalisée sous la forme d'une unité d'adsorption.

11. Installation selon la revendication 9 ou 10, **caractérisée en ce que** le réacteur d'oxydation (5) présente au moins un point d'ajout d'agent oxydant (10), en particulier plusieurs points d'ajout d'agent oxydant (10) disposés à distance les uns des autres le long d'une zone de réaction dans le réacteur d'oxydation (5), pour régler de manière ciblée une concentration en oxygène le long de la zone de réaction.

12. Installation selon l'une des revendications 9 à 11, **caractérisée en ce que** le réacteur d'oxydation (5) est au moins partiellement intégré dans le réacteur de déshydrogénation (2), le réacteur d'oxydation (5) présentant en particulier au moins un tube d'oxydation (30) dans lequel la réaction d'oxydation a lieu, ledit au moins un tube d'oxydation (30) étant disposé, en particulier entièrement, à l'intérieur du réacteur de déshydrogénation (2).

13. Installation selon la revendication 12, **caractérisée en ce que** le réacteur d'oxydation (5) présente plusieurs tubes d'oxydation (30) qui sont disposés en série, en particulier le long d'une direction d'écoulement de fluide à travers le réacteur d'oxydation (5), au moins un point d'ajout d'agent oxydant (10) étant en particulier disposé au niveau de la transition entre deux tubes d'oxydation (30) disposés en série.
